# EUROPEAN PATENT SPECIFICATION

(11) **EP 4 215 464 B1**
(45) Date of publication and mention of the grant of the patent: **09.10.2024**
(21) Application number: 22153305.2
(22) Date of filing: 25.01.2022
(51) Int. Cl.: B65G 47/64, B65G 47/96

(54) **A TRANSPORT APPARATUS**
TRANSPORTVORRICHTUNG
APPAREIL DE TRANSPORT

(43) Date of publication of application: 26.07.2023
(73) Proprietor: Eurosort B.V., 1243 HV 's-Graveland (NL)
(72) Inventor: Green, Todd, Severna Park, 21146 (US); Dordai, Matthew, Baltimore, 21211 (US); Diamanti, Peter, Harleysville, 19438 (US); Fry, Scott, Ellicott City, 21042 (US); Van Haaster, Patrick Theodorus Johannes, 2191 AS De Zilk (NL)
(74) Representative: De Vries & Metman

(56) References cited:
- EP-A1- 4 163 235
- JP-A- H08 301 438

## Description

The present invention relates to a transport apparatus, which comprises a frame, a conveyor for conveying discrete products to be sorted which conveyor is drivable with respect to the frame in a direction of conveyance.

Such a transport apparatus is well-known in the prior art. The conveyor of the known transport apparatus is suitable for conveying discrete products to be sorted. Under operating conditions it will transport discrete products which are located at different locations along the conveyor. In practice there may be several locations at the conveyor which are not occupied and thus suitable for receiving a product to be sorted.

JP H08 301438 A discloses a transport apparatus, comprising a frame, a conveyor for conveying discrete products to be sorted which conveyor is drivable with respect to the frame in a direction of conveyance , a loading unit for receiving a product which loading unit is located at a position along the conveyor, a product transfer device for transferring a product from the loading unit to the conveyor, a product detector for detecting a product at the loading unit, wherein the loading unit comprises a loading conveyor for bearing a product, which loading conveyor is mounted to the frame above the conveyor allowing a product to move downwardly with respect to the loading conveyor to the conveyor in a direction which has a component in the direction of conveyance.

The document EP 4 163 235 A1, which is prior art in the sense of Article 54(3) EPC, discloses a transport apparatus , comprising a frame, a conveyor for conveying discrete products to be sorted which conveyor is drivable with respect to the frame in a direction of conveyance , a loading unit for receiving a product which loading unit is located at a position along the conveyor, a product transfer device for transferring a product from the loading unit to the conveyor, a product detector for detecting a free location at the conveyor for receiving a product, and a controller having an input for receiving signals from the product detector and an output for sending a control signal to the product transfer device, wherein the controller is configured such that when the first product detector detects a free location at the conveyor, the product transfer device transfers the product from the loading unit to the free location when the free location passes the loading unit, wherein the loading unit comprises a platform for bearing a product, which platform is mounted to the frame above the conveyor and movable with respect to the frame between a product receiving position and a product releasing position, wherein the product transfer device comprises a driving system for moving the platform from the product receiving position to the product releasing position, hence allowing a product to move downwardly with respect to the platform to the conveyor.

An object of the invention is to provide a transport apparatus with high capacity.

This object is accomplished with the transport apparatus according to the invention, which comprises a loading unit for receiving a product which loading unit is located at a position along the conveyor, a product transfer device for transferring a product from the loading unit to the conveyor, a first product detector for detecting a free location at the conveyor for receiving a product, a second product detector for detecting a product at the loading unit and a controller having an input for receiving signals from the first and second product detectors, respectively, and an output for sending a control signal to the product transfer device, wherein the controller is configured such that when the first product detector detects a free location at the conveyor and the second product detector detects a product at the loading unit the product transfer device transfers the product from the loading unit to the free location when the free location passes the loading unit, wherein the loading unit comprises a platform for bearing a product, which platform is mounted to the frame above the conveyor and tiltable with respect to the frame about an axis of rotation between a lying product receiving position and a downwardly directed product releasing position, which axis of rotation is angled with respect to the direction of conveyance, wherein the product transfer device comprises a driving system for tilting the platform from the product receiving position to the product releasing position, hence allowing a product to move downwardly with respect to the platform to the conveyor in a direction which has a component in the direction of conveyance.

An advantage of the transport apparatus according to the invention is that free locations at the conveyor can be provided with respective products such that the capacity of the transport apparatus can be optimized. Since the second product detector detects whether a product is present at the loading unit it is only necessary to supply a product to be sorted to the loading unit. This can be performed manually by an operator, but it is also possible to apply a robot or the like. The second product detector may be configured to detect a unique code of the product that is supplied to the loading unit in order to follow the product during its travelling through the transport apparatus. It is also possible to locate more than one loading unit along the conveyor.

In the lying product receiving position the platform may have such an orientation that a product on the platform will not automatically move from the platform by gravity. In the product releasing position the platform may have such an orientation that a product will automatically move from the platform by gravity. The inclination of the platform in the product releasing position with respect to a horizontal plane is larger than in the product receiving position. For example the inclination in the product releasing position may be 45°, but different angles are possible.

Since the platform tilts from the product receiving position to the product releasing position such that a product on the platform can move downwardly in a direction which has a component in the direction of conveyance the product has already a velocity in the same direction as the direction of conveyance of the conveyor upon arriving at the free location of the conveyor. This provides the opportunity to operate the conveyor at a relatively high speed. In fact, the normal to an upper face or bearing surface of the platform in the product releasing position has a component in the direction of conveyance.

It is noted, that the axis of rotation has a horizontally oriented orientation in order to create the downwardly directed product releasing position.

The conveyor may comprise a plurality of discrete carriers located behind each other in the direction of conveyance, wherein the first product detector is adapted to detect an empty carrier being a free location at the conveyor. Numerous types of carriers are conceivable. For example, each of the carriers may be provided with a tray that is tiltable in order to drop a product at a predetermined location along the conveyor, such as in case of a so-called 'Bomb-bay' or `split tray' sorter or a tilt tray or cross tray sorter, but it is also conceivable that a pusher moves the product from the tray, i.e. a push tray sorter.

It is not necessary that the conveyor itself forms a sorter. The conveyor may also supply products to a sorter.

The platform may be transparent in order to provide a product identifier below the platform so as to identify a product that is placed on the platform, for example by reading a barcode.

In the product receiving position of the platform an upper face or bearing surface of the platform may extend substantially horizontally.

The platform may form a bridge above the conveyor. It may be located 50 cm above the conveyor, for example, such that other passing products at the conveyor are not obstructed by the platform when it is in the product receiving position.

In a preferred embodiment the platform is mounted to the frame via a support which is mounted to the frame and tiltable with respect to the frame about the axis of rotation by the driving system, whereas the platform is movable with respect to the support by the driving system in a direction which has a component in the direction of conveyance, since in that case a product on the platform can be accelerated in the product releasing position by gravity as well as by means of the motion of the platform with respect to the support.

The platform may be movable with respect to the support in a direction perpendicular to the axis of rotation.

The controller may be configured such that the driving system tilts the support and moves the platform with respect to the support synchronously.

The controller may be configured such that when the second product detector identifies more than one product at the loading unit the product transfer device is not activated. The controller may additionally raise an alert such that an operator can remove one or more products from the loading unit. It is also possible that the loading unit comprises a mechanism to remove one or more products from the loading unit to a different location than to the conveyor.

The platform may have a flat upper surface so as to allow a product to slide or roll downwardly on the upper surface by gravity when the platform is tilted from the product receiving position to the product releasing position. The upper surface may be smooth to facilitate a sliding movement.

The second product detector may be configured to identify the location of a product on the platform in the direction of conveyance. On the basis of this location information, the timing of activating the driving system and/or the speed of the driving system can be adapted such that the product can be transferred to the free location in an accurate way. For example, the timing of tilting the platform can be advanced or retarded. If the product is placed at the upstream end of the platform instead of in its centre, the start of tilting the platform can be advanced. It is also conceivable to adapt the timing dependent on friction between the platform and the product.

The apparatus may be provided with a third product detector for identifying a location where a released product from the platform arrives at the conveyor. A signal from the third product detector may be a feedback signal to the controller in order to adjust timing of activating the driving system or to adjust the speed of the driving system.

The platform may be provided with one or more guides to guide a product during its movement with respect to the platform during tilting the platform from the product receiving position to the product releasing position. This may force a product to follow a predetermined path to the free location at the conveyor. The guide or guides may be located along lateral edges of the platform. It is also possible that the guide or guides form a converging path in the direction of conveyance, for example a funnel shape.

The distance between the platform and the conveyor may be larger than 50% of the length of the platform as measured in the conveying direction when the platform is in its product receiving position.

The second product detector may be configured to identify a product on the platform, for example by scanning a code on the product, dimensioning the product or weighing the product. Since the product has a temporarily static position on the platform before being transferred to the intended free location at the conveyor there is a time period to perform the mentioned actions. In practice the time period may be relatively long since the frequency that real free locations pass the loading unit, i.e. the free locations to which respective products will be transferred from the platform, will be lower than the frequency that possible free locations pass the loading unit, since a part of the possible free locations will be occupied by a product. For example, in the event that the conveyor comprises a plurality of discrete carriers, in practice only a part of the carriers that pass the loading unit are empty; hence, the frequency that empty carriers pass the loading unit will be lower than the frequency that all carriers, i.e. empty and loaded carriers, pass the loading unit.

For the same reason the apparatus may be provided with means for labelling a product on the platform, for example by printing a code on the product.

The invention will hereafter be elucidated with reference to very schematic drawings showing an embodiment of the invention by way of example.
Fig. 1 is a perspective view of a part of an embodiment of a transport apparatus according to the invention.
Fig. 2 is a similar view as Fig. 1, showing an enlarged part thereof in a first condition.
Fig. 3 is a similar view as Fig. 2, showing the part in a second condition.

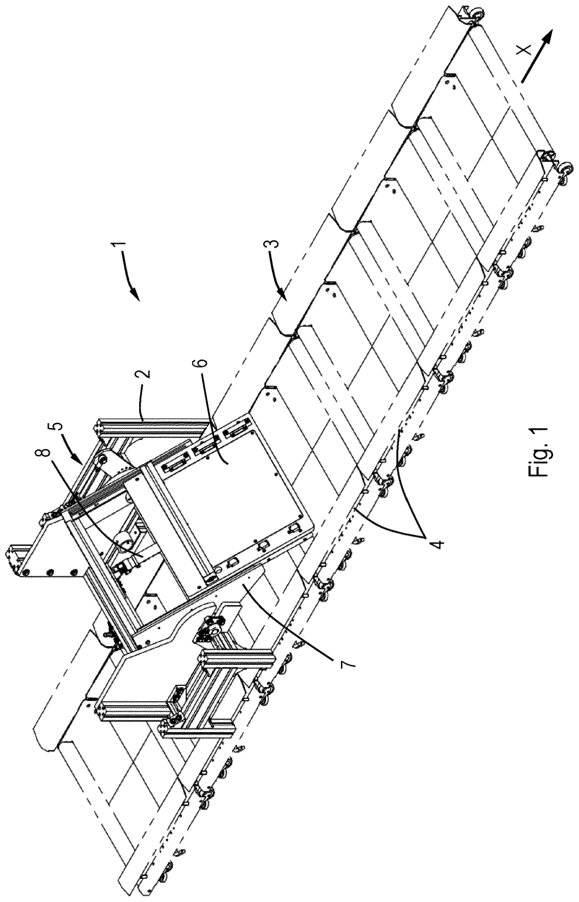

Fig. 1 shows a part of an embodiment of a transport apparatus 1 according to the invention. The transport apparatus 1 comprises a frame 2 and a conveyor 3. The conveyor 3 is drivable with respect to the frame 2 in a direction of conveyance X. The conveyor 3 comprises a plurality of discrete carriers 4 which are coupled to each other and follow a closed loop under operating conditions. The carriers 4 are intended to support and transport respective discrete products such that each carrier 4 supports and transports one product. The conveyor 3 is of a type which is called a 'Bomb-bay' or `split tray' sorter. Each of the carriers 4 is provided with tiltable trays which can be opened to drop a product which is destined for a predetermined receiving container (not shown) below the conveyor 3.

The transport apparatus 1 is further provided with a loading unit 5 for receiving a product. The loading unit 5 is located at a certain position along the conveyor 3 and comprises a platform 6 including a flat upper surface for bearing a product. The platform 6 is located above the conveyor 3 and forms a bridge across the conveyor 3. The platform 6 is slidably mounted to a support 7 and movable with respect to the support 7 by means of a first pneumatic cylinder 8. The support 7 is tiltable with respect to the frame 2 about an axis of rotation AR by means of a second pneumatic cylinder 9. The second pneumatic cylinder 9 is pivotally coupled to an arm 10 which is fixed to a shaft that in turn is fixed to the support 7. The axis of rotation AR extends horizontally and perpendicularly to the direction of conveyance X. The platform 6 is movable with respect to the support 7 in a direction perpendicular to the axis of rotation AR. The first and second pneumatic cylinders 8, 9 form part of a product transfer device for transferring a product from the loading unit 5 to the conveyor 3.

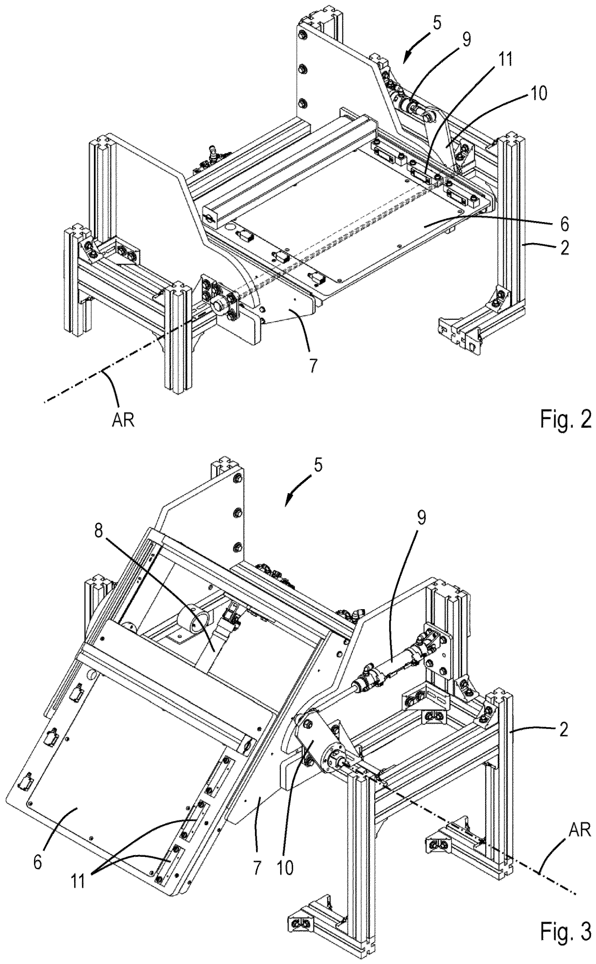

The platform 6 is movable between a lying product receiving position in which the upper surface of the platform 6 extends substantially horizontally, which condition is shown in Fig. 2, and a downwardly directed product releasing position, which condition is shown in Figs. 1 and 3. In the product receiving position the first and second pneumatic cylinders 8, 9 are retracted and in the product releasing position the first and second pneumatic cylinders 8, 9 are extended. Hence, in the latter condition the platform 6 is tilted about the axis of rotation AR as well as translated with respect to the support 7 in downward direction. When the first cylinder 8 moves from the retracted to the extended position the platform 6 is moved with respect to the support 7 in a direction which has a component in the direction of conveyance X. This means that a product on the platform 6 will be accelerated in the direction of conveyance X by the translative motion, in addition to the acceleration caused by gravity when the platform 6 is inclined with respect to a horizontal plane. This leads to a fast product release, which allows a high velocity of conveyance of the conveyor 3.

Under normal operating conditions a part of the carriers 4 upstream of the loading unit 5 are already provided with a product. These loaded carriers 4 pass the loading unit 5 without tilting the platform 6. Some of the carriers 4 are empty and may be loaded by a product from the platform 6 when passing the loading unit 5. When the platform 6 is moved from the product receiving position to the product releasing position a product that is placed on the platform 6 will slide or roll downwardly with respect to the platform 6 and arrive on an empty carrier 4 which is passing the loading unit 5.

The transport apparatus 1 is provided with a first product detector (not shown) for detecting an empty carrier 4 upstream of the loading unit 5 onto which empty carrier 4 a product from the platform 6 can be transferred. The loading unit 5 is provided with a second product detector 11 for detecting a product on the platform 6. In the embodiment as shown in Figs. 1-3 the second product detector 11 is formed by three sensors for identifying a product on the platform 6, but this may be different in an alternative embodiment. It is even possible that the platform 6 is transparent and the second product detector is located below the platform 6.

A transparent platform 6 provides the opportunity to locate a product identifier below the platform 6 in order to identify a product that is placed on the platform 6, for example by reading a barcode.

The transport apparatus 1 is also provided with a controller (not shown) for automatically transferring a product from the loading unit 5 to an empty carrier 4. The controller has an input for receiving signals from the first and second product detectors 11 and an output for sending control signals to the first and second pneumatic cylinders 8, 9. The controller is configured such that when the first product detector detects an empty carrier 4 upstream of the loading unit 5 and the second product detector 11 identifies a product on the platform 6 the controller will activate the first and second pneumatic cylinders 8, 9 such that the product will be transferred to the empty carrier 4 when it passes the loading unit 5. The product may be placed onto the platform 6 manually by an operator or automatically by a robot or the like.

The sensors of the second product detector 11 may be positioned in such a way that the controller can identify the location of a product on the platform 6 so as to adapt the timing of activating the first and/or second pneumatic cylinders 8, 9 and/or their speed in dependency of the location of the product.

The controller may be configured such that when the second product detector 11 identifies more than one product at the loading unit 5 the first and second pneumatic cylinders 8, 9 are not activated. In that case an alarm may be generated in order to enable an operator to remove one or more products from the platform 6. It is also possible that a robot automatically removes one or more products from the platform 6.

Since the platform 6 forms a bridge across the conveyor 3 the required distance between the conveyor 3 and the platform 6 in the product receiving position depends on the maximum height of products that are transported by the conveyor 3. It may be 50 cm, for example. In the product releasing position of the platform 6 its upper surface may be inclined by 45° with respect to a horizontal plane, but this may be different. In the latter position a free end of the platform 6 may be close to the conveyor 3, for example a few centimetres above the conveyor 3.

It is noted that when the platform 6 is in the product receiving position and a product is placed on the platform 6 it is easy to apply a label onto the product, since the product has a temporarily static position before being transferred to the intended free location at the conveyor 3.

The invention is not limited to the embodiment shown in the drawings and described hereinbefore, which may be varied in different manners, the scope of protection of the invention being defined by the appended claims. For example, the conveyor may have a continuous upper face instead of discrete carriers whereas the first product detector detects an empty portion of the upper face rather than an empty carrier. It is also possible that the loading unit has an additional device for removing a product from the platform in its product releasing position, for example a pushing device.

## Claims

1. A transport apparatus (1), comprising a frame (2), a conveyor (3) for conveying discrete products to be sorted which conveyor (3) is drivable with respect to the frame (2) in a direction of conveyance (X), a loading unit (5) for receiving a product which loading unit (5) is located at a position along the conveyor (3), a product transfer device (8-10) for transferring a product from the loading unit (5) to the conveyor (3), a first product detector for detecting a free location at the conveyor (3) for receiving a product, a second product detector (11) for detecting a product at the loading unit (5) and a controller having an input for receiving signals from the first and second product detectors (11), respectively, and an output for sending a control signal to the product transfer device (8-10), wherein the controller is configured such that when the first product detector detects a free location at the conveyor (3) and the second product detector (11) detects a product at the loading unit (5) the product transfer device (8-10) transfers the product from the loading unit (5) to the free location when the free location passes the loading unit (5), wherein the loading unit (5) comprises a platform (6) for bearing a product, which platform (6) is mounted to the frame (2) above the conveyor (3) and tiltable with respect to the frame (2) about an axis of rotation (AR) between a lying product receiving position and a downwardly directed product releasing position, which axis of rotation (AR) is angled with respect to the direction of conveyance (X), wherein the product transfer device comprises a driving system (9, 10) for tilting the platform (6) from the product receiving position to the product releasing position, hence allowing a product to move downwardly with respect to the platform (6) to the conveyor (3) in a direction which has a component in the direction of conveyance (X) .

2. A transport apparatus (1) according to claim 1, wherein the conveyor (3) comprises a plurality of discrete carriers (4) located behind each other in the direction of conveyance (X), wherein the first product detector is adapted to detect an empty carrier (4) being a free location at the conveyor (3).

3. A transport apparatus (1) according to claim 1 or 2, wherein in the product receiving position an upper face of the platform (6) extends substantially horizontally.

4. A transport apparatus (1) according to any one of the preceding claims, wherein the axis of rotation (AR) is substantially perpendicular to the direction of conveyance (X).

5. A transport apparatus (1) according to any one of the preceding claims, wherein the platform (6) is mounted to the frame (2) via a support (7) which is mounted to the frame (2) and tiltable with respect to the frame (2) about the axis of rotation (AR) by the driving system (8-10), whereas the platform (6) is movable with respect to the support (7) by the driving system (8-10) in a direction which has a component in the direction of conveyance (X).

6. A transport apparatus (1) according to claim 5, wherein the platform (6) is movable with respect to the support (7) in a direction perpendicular to the axis of rotation (AR).

7. A transport apparatus (1) according to claim 5 or 6, wherein the controller is configured such that the driving system (8-10) tilts the support (7) and moves the platform (6) with respect to the support (7) synchronously.

8. A transport apparatus (1) according to any one of the preceding claims, wherein the controller is configured such that when the second product detector (11) identifies more than one product at the loading unit (5) the product transfer device (8-10) is not activated.

9. A transport apparatus (1) according to any one of the preceding claims, wherein the platform (6) has a flat upper surface so as to allow a product to slide or roll downwardly on the upper surface by gravity when the platform (6) is tilted from the product receiving position to the product releasing position.

10. A transport apparatus (1) according to any one of the preceding claims, wherein the second product detector (11) is configured to identify the location of a product on the platform (6) in the direction of conveyance (X).

11. A transport apparatus (1) according to any one of the preceding claims, wherein the apparatus (1) is provided with a third product detector for identifying a location where a released product from the platform (11) arrives at the conveyor (3) .

12. A transport apparatus (1) according to any one of the preceding claims, wherein the distance between the platform (11) and the conveyor (3) is larger than 50% of the length of the platform (6) as measured in the conveying direction when the platform (6) is in its product receiving position.

13. A transport apparatus (1) according to any one of the preceding claims, wherein the second product detector (11) is configured to identify a product on the platform (11), for example by scanning a code on the product, dimensioning the product or weighing the product.

14. A transport apparatus (1) according to any one of the claims 1-12, wherein the apparatus (1) is provided with means for labelling a product on the platform (11), for example by printing a code on the product.

## Patentansprüche

1. Transportvorrichtung (1), die aufweist: einen Rahmen (2), einen Förderer (3) zum Befördern einzelner Produkte, die sortiert werden sollen, wobei der Förderer (3) in Bezug auf den Rahmen (2) in eine Förderrichtung (X) antreibbar ist, eine Ladeeinheit (5) zum Empfangen eines Produkts, wobei die Ladeeinheit (5) an einer Position entlang des Förderers (3) angeordnet ist, eine Produkttransfervorrichtung (8-10) zum Transferieren eines Produkts von der Ladeeinheit (5) an den Förderer (3), eine erste Produkterfassungseinrichtung zum Erfassen einer freien Stelle auf dem Förderer (3) zum Empfangen eines Produkts, eine zweite Produkterfassungseinrichtung (11) zum Erfassen eines Produkts an der Ladeeinheit (5) und eine Steuerung mit einem Eingang zum Empfangen von Signalen jeweils von der ersten und zweiten Produkterfassungseinrichtung (11) und einen Ausgang zum Senden eines Steuersignals an die Produkttransfervorrichtung (8-10), wobei die Steuerung derart konfiguriert ist, dass, die Produkttransfervorrichtung (8-10), wenn die erste Produkterfassungseinrichtung eine freie Stelle auf dem Förderer (3) erfasst und die zweite Produkterfassungseinrichtung (11) ein Produkt an der Ladeeinheit (5) erfasst, das Produkt von der Ladeeinheit (5) zu der freien Stelle transferiert, wenn die freie Stelle an der Ladeeinheit (5) vorbeikommt, wobei die Ladeeinheit (5) eine Plattform (6) zum Tragen eines Produkts aufweist, wobei die Plattform (6) oberhalb des Förderers (3) an den Rahmen (2) montiert ist und in Bezug auf den Rahmen (2) um eine Drehachse (AR) zwischen einer liegenden Produktempfangsposition und einer nach unten gerichteten Produktfreigabeposition kippbar ist, wobei die Drehachse (AR) in Bezug auf die Förderrichtung (X) gewinkelt ist, wobei die Produkttransfervorrichtung ein Antriebssystem (9, 10) zum Kippen der Plattform (6) von der Produktempfangsposition in die Produktfreigabeposition aufweist, und infolgedessen ermöglicht, dass ein Produkt sich in Bezug auf die Plattform (6) in eine Richtung, die eine Komponente in der Förderrichtung (X) hat, nach unten zu dem Förderer (3) bewegt.

2. Transportvorrichtung (1) nach Anspruch 1, wobei der Förderer (3) mehrere einzelne Träger (4) aufweist, die in der Förderrichtung (X) hintereinander angeordnet sind, wobei die erste Produkterfassungseinrichtung eingerichtet ist, einen leeren Träger (4), der eine freie Stelle auf dem Förderer (3) ist, zu erfassen.

3. Transportvorrichtung (1) nach Anspruch 1 oder 2, wobei sich in der Produktempfangsposition eine Oberseite der Plattform (6) im Wesentlichen horizontal erstreckt.

4. Transportvorrichtung (1) nach einem der vorhergehenden Ansprüche, wobei die Drehachse (AR) im Wesentlichen senkrecht zu der Förderrichtung (X) ist.

5. Transportvorrichtung (1) nach einem der vorhergehenden Ansprüche, wobei die Plattform (6) über eine Halterung (7), die an den Rahmen (2) moniert ist und durch das Antriebssystem (8-10) in Bezug auf den Rahmen (2) um die Drehachse (AR) kippbar ist, an dem Rahmen (2) montiert ist, während die Plattform (6) durch das Antriebssystem (8-10) in Bezug auf die Halterung (7) in einer Richtung beweglich ist, die eine Komponente in der Förderrichtung (X) hat.

6. Transportvorrichtung (1) nach Anspruch 5, wobei die Plattform (6) in Bezug auf die Halterung (7) in eine Richtung senkrecht zu der Drehachse (AR) beweglich ist.

7. Transportvorrichtung (1) nach Anspruch 5 oder 6, wobei die Steuerung derart konfiguriert ist, dass das Antriebssystem (8-10) die Halterung (7) kippt und die Plattform (6) in Bezug auf die Halterung (7) synchron bewegt.

8. Transportvorrichtung (1) nach einem der vorhergehenden Ansprüche, wobei die Steuerung derart konfiguriert ist, dass die Produkttransfervorrichtung (8-10) nicht aktiviert wird, wenn die zweite Produkterfassungseinrichtung (11) mehr als ein Produkt an der Ladeeinheit (5) identifiziert.

9. Transportvorrichtung (1) nach einem der vorhergehenden Ansprüche, wobei die Plattform (6) eine flache obere Oberfläche hat, um zu ermöglichen, dass ein Produkt auf der oberen Oberfläche durch die Schwerkraft nach unten gleitet oder rollt, wenn die Plattform (6) von der Produktempfangsposition in die Produktfreigabeposition gekippt wird.

10. Transportvorrichtung (1) nach einem der vorhergehenden Ansprüche, wobei die zweite Produkterfassungseinrichtung (11) konfiguriert ist, um die Stelle eines Produkts auf der Plattform (6) in der Förderrichtung (X) zu erfassen.

11. Transportvorrichtung (1) nach einem der vorhergehenden Ansprüche, wobei die Vorrichtung (1) mit einer dritten Produkterfassungseinrichtung versehen ist, um eine Stelle, wo ein von der Plattform (11) freigegebenes Produkt auf dem Förderer (3) ankommt, zu identifizieren.

12. Transportvorrichtung (1) nach einem der vorhergehenden Ansprüche, wobei der Abstand zwischen der Plattform (11) und dem Förderer (3) größer als 50% der Länge der Plattform (6) in der Förderrichtung gemessen ist, wenn die Plattform (6) in ihrer Produktempfangsposition ist.

13. Transportvorrichtung (1) nach einem der vorhergehenden Ansprüche, wobei die zweite Produkterfassungseinrichtung (11) konfiguriert ist, um ein Produkt auf der Plattform (11), zum Beispiel durch Abtasten eines Codes auf dem Produkt, Vermessen oder Wiegen des Produkts, zu identifizieren.

14. Transportvorrichtung (1) nach einem der Ansprüche 1 - 12, wobei die Vorrichtung mit einer Einrichtung zum Etikettieren eines Produkts auf der Pattform (11), zum Beispiel durch Drucken eines Codes auf das Produkt, versehen ist.

## Revendications

1. Appareil de transport (1), comprenant un cadre (2), un transporteur (3) pour transporter des produits distincts devant être triés, ledit transporteur (3) pouvant être entraîné par rapport au cadre (2) dans une direction de transport (X), une unité de charge (5) pour recevoir un produit, ladite unité de charge (5) étant située au niveau d'une position le long du transporteur (3), un dispositif de transfert de produit (8-10) pour transférer un produit de l'unité de charge (5) au transporteur (3), un premier détecteur de produit pour détecter un emplacement libre au niveau du transporteur (3) pour recevoir un produit, un deuxième détecteur de produit (11) pour détecter un produit au niveau de l'unité de charge (5) et un dispositif de commande présentant une entrée pour recevoir des signaux en provenance des premier et deuxième détecteurs de produit (11), respectivement, et une sortie pour envoyer un signal de commande au dispositif de transfert de produit (8-10), dans lequel le dispositif de commande est configuré de sorte que le premier détecteur de produit détecte un emplacement libre au niveau du transporteur (3) et le deuxième détecteur de produit (11) détecte un produit au niveau de l'unité de charge (5), le dispositif de transfert de produit (8-10) transfère le produit de l'unité de charge (5) à l'emplacement libre lorsque l'emplacement libre dépasse l'unité de charge (5), dans lequel l'unité de charge (5) comprend une plateforme (6) pour porter un produit, ladite plateforme (6) étant montée sur le cadre (2) au-dessus du transporteur (3) et inclinable par rapport au cadre (2) autour d'un axe de rotation (AR) entre une position de réception de produit posé et une position de libération de produit dirigée vers le bas, ledit axe de rotation (AR) étant articulé par rapport à la direction de transport (X), dans lequel le dispositif de transfert de produit comprend un système d'entraînement (9, 10) pour incliner la plateforme (6) de la position de réception de produit à la position de libération de produit, permettant ainsi à un produit de se déplacer vers le bas par rapport à la plateforme (6) vers le transporteur (3) dans une direction qui présente un composant dans la direction de transport (X).

2. Appareil de transport (1) selon la revendication 1, dans lequel le transporteur (3) comprend une pluralité de paliers (4) distincts situés les uns derrière les autres dans la direction de transport (X), dans lequel le premier détecteur de produit est conçu pour détecter un palier (4) vide qui est un emplacement libre au niveau du transporteur (3) .

3. Appareil de transport (1) selon la revendication 1 ou 2, dans lequel dans la position de réception de produit une face supérieure de la plateforme (6) s'étend sensiblement horizontalement.

4. Appareil de transport (1) selon l'une quelconque des revendications précédentes, dans lequel l'axe de rotation (AR) est sensiblement perpendiculaire à la direction de transport (X).

5. Appareil de transport (1) selon l'une quelconque des revendications précédentes, dans lequel la plateforme (6) est montée sur le cadre (2) par le biais d'un support (7) qui est monté sur le cadre (2) et inclinable par rapport au cadre (2) autour de l'axe de rotation (AR) par le système d'entraînement (8-10), alors que la plateforme (6) est mobile par rapport au support (7) par le système d'entraînement (8-10) dans une direction qui présente un composant dans la direction de transport (X).

6. Appareil de transport (1) selon la revendication 5, dans lequel la plateforme (6) est mobile par rapport au support (7) dans une direction perpendiculaire à l'axe de rotation (AR).

7. Appareil de transport (1) selon la revendication 5 ou 6, dans lequel le dispositif de commande est configuré de sorte que le système d'entraînement (8-10) incline le support (7) et déplace la plateforme (6) par rapport au support (7) de façon synchrone.

8. Appareil de transport (1) selon l'une quelconque des revendications précédentes, dans lequel le dispositif de commande est configuré de sorte que lorsque le deuxième détecteur de produit (11) identifie plus d'un produit au niveau de l'unité de charge (5), le dispositif de transfert de produit (8-10) n'est pas activé.

9. Appareil de transport (1) selon l'une quelconque des revendications précédentes, dans lequel la plateforme (6) présente une surface supérieure plate de manière à permettre à un produit de coulisser ou de rouler vers le bas sur la surface supérieure par gravité lorsque la plateforme (6) est inclinée de la position de réception de produit à la position de libération de produit.

10. Appareil de transport (1) selon l'une quelconque des revendications précédentes, dans lequel le deuxième détecteur de produit (11) est configuré pour identifier l'emplacement d'un produit sur la plateforme (6) dans la direction de transport (X).

11. Appareil de transport (1) selon l'une quelconque des revendications précédentes, dans lequel l'appareil (1) est doté d'un troisième détecteur de produit pour identifier un emplacement où un produit libéré de la plateforme (11) arrive au niveau du transporteur (3).

12. Appareil de transport (1) selon l'une quelconque des revendications précédentes, dans lequel la distance entre la plateforme (11) et le transporteur (3) est supérieure de 50 % à la longueur de la plateforme (6) telle que mesurée dans la direction de transport lorsque la plateforme (6) est dans sa position de réception de produit.

13. Appareil de transport (1) selon l'une quelconque des revendications précédentes, dans lequel le deuxième détecteur de produit (11) est configuré pour identifier un produit sur la plateforme (11), par exemple par le balayage d'un code sur le produit, le dimensionnement du produit ou la pesée du produit.

14. Appareil de transport (1) selon l'une quelconque des revendications 1-12, dans lequel l'appareil (1) est doté d'un moyen pour étiqueter un produit sur la plateforme (11), par exemple par l'impression d'un code sur le produit.
